# EUROPÄISCHE PATENTANMELDUNG

(11) **EP 1 216 776 A2**
(43) Veröffentlichungstag der Anmeldung: **26.06.2002**
(21) Anmeldenummer: 01128672.1
(22) Anmeldetag: 01.12.2001
(51) Int. Cl.: B23D 31/00

(54) **Verfahren und Vorrichtung zum Ausschneiden von Abschnitten aus Tafeln**

(30) Priorität: 21.12.2000 CH 24992000; 11.04.2001 CH 6762001
(71) Anmelder: Langhans, René, 9034 Eggersriet (CH)
(72) Erfinder: Langhans, René, 9034 Eggersriet (CH)
(74) Vertreter: Römpler, Aldo

(57) **Zusammenfassung**

Mit einer ersten Schneideinrichtung (3) werden die Tafeln (2) in Streifen (4) und mit einer zweiten Schneideinrichtung (5) diese Streifen (4) in Abschnitte (1) geschnitten. Mittels Tafel-Greifern (14) und/oder Streifen-Greifern (16) wird jede Tafel (2), bzw. jeder Streifen (4), während des Arbeitsablaufs ununterbrochen festgehalten und in gerader Vorschubrichtung durch beide Arbeitsgänge bewegt. In Weiterführung des Erfindungsgedankens können die beiden Arbeitsgänge so gesteuert werden, dass die zweite Schneideinrichtung (5) zeitlich bereits vor der ersten Schneideinrichtung (3) tätig wird. Dabei werden zuerst die Schnitte eingebracht, welche die Streifen (4) in Abschnitte (1) trennen und danach die Schnitte, welche die Streifen (4) von der Tafel (2) abtrennen. Ein zu unwinkligen Schnitten führendes Verkanten ist dadurch ausgeschlossen. Diese Konstruktion hat zudem den Vorteil, dass die Vorrichtung ohne weiteres derart automatisierbar ist, dass das Umstellen auf andere Formate sehr einfach und in kürzester Zeit möglich ist.

## Beschreibung

Die vorliegende Erfindung betrifft ein Verfahren zum Ausschneiden von Abschnitten aus Tafeln, mit einem Arbeitsgang zum Schneiden der Tafeln in Streifen, mittels einer ersten Schneideinrichtung, und mit einem weiteren Arbeitsgang zum Schneiden der Streifen in Abschnitte, mittels einer zweiten Schneideinrichtung. Weiter betrifft die Erfindung eine Vorrichtung zur Ausführung dieses Verfahrens.

Hauptsächlich geht es darum, Abschnitte aus Tafeln aus Blech, beispielsweise Weiss-, Schwarzblech oder Aluminium, auszuschneiden. In der weiteren Verarbeitung sind diese Abschnitte zur Herstellung von Dosen bestimmt, wozu die einzelnen Abschnitte gerundet und mit einem Boden sowie später, nach der Füllung, auch mit einem Deckel versehen werden. Das Zusammenfügen eines Abschnitts zum rohrartigen Dosenkörper erfolgt mittels einer Schweiss- oder Falzverbindung. Die Dosen können, wie üblich, zur Verpackung von Getränken, Nahrungsmitteln, Ölen, Farben, usw. verwendet werden.

Die bisher bekannten Vorrichtungen zum Ausschneiden von Abschnitten aus Tafeln weisen eine erste Schneideinrichtung auf, namentlich eine Rollschere mit mehreren auf einer Welle parallel mit Abstand zueinander angeordneten radartigen Rollmessern, mittels welchen die zugeführten Tafeln in Streifen geschnitten werden. Für jeden Schnitt sind jeweils zwei Rollmesser vorgesehen, eines unter- und eines oberhalb der Tafel. Die derart zugeschnittenen Streifen, fallen zumeist auf eine tiefere Arbeitsebene, wo sie durch eine relativ aufwendige und komplizierte Mechanik ausgerichtet und einer zweiten Schneideinrichtung zum Ausschneiden von mehreren Abschnitten aus diesen Streifen zugeführt werden. Die zweite Schneideinrichtung ist im Prinzip gleich wie die erste aufgebaut und weist ebenfalls Rollmesser auf. Hierdurch ergibt es sich, dass die zweite Schneideinrichtung üblicherweise im rechten Winkel zur ersten angeordnet ist, um die zuerst längs in mehrere Streifen geschnittenen Tafeln nun quer dazu in einzelne Abschnitte zerschneiden zu können. Aufgrund dieses Aufbaus weisen die bisherigen Vorrichtungen eine ganze Reihe von Nachteilen auf. Grundsätzlich ist die Winkelanordnung der beiden Schneideinrichtungen im Betrieb unpraktisch. Da auch genug Raum zum Zuführen der Tafeln, meistens mittels eines Gabelstaplers, und zum Abführen der fertigen Abschnitte vorzusehen ist, ergibt sich ein verhältnismässig grosser Platzbedarf. Das bedeutet, dass beispielsweise entweder weniger Fertigungsstrassen nebeneinander vorgesehen werden können, oder das Fabrikgebäude von vornherein breiter geplant werden muss. Gravierender sind jedoch noch die Nachteile in der Abschnitt-Herstellung selbst, und zwar einerseits bei der Einstellungsarbeit der Vorrichtung und andererseits bei der Qualität der Abschnitte. Einstellungsarbeiten ergeben sich beim Formatwechsel zu grösseren oder kleineren Abschnitten, die ihrerseits zur Herstellung von grösseren oder kleineren Dosen benötigt werden. Bei den bisher bekannten Vorrichtungen sind hierzu manuell die beispielsweise 28 Rollmesser sowie eine ganze Anzahl von Führungen, Vortriebs- und Ausricht-Einrichtungen zu verstellen. Insgesamt dauert die Einstell- und Justierarbeit bei jedem Formatwechsel 2.5 bis 8 Stunden. Dies ist insbesondere bei der Herstellung von kleineren Abschnitt- bzw. Dosenserien sehr unwirtschaftlich und erschwert auch das Eingehen auf spezielle Kundenwünsche. Unter dem komplizierten mechanischen Aufbau dieser Vorrichtungen und der Tatsache, dass die Streifen jeweils neu geordnet werden müssen, bevor sie der zweiten Schneideinrichtung zugeführt werden, ergeben sich auch Probleme hinsichtlich der Qualität der Schnittwinkel der fertigen Abschnitte . Dies liegt einerseits daran, dass Rollmesser dazu neigen, einen leicht gebogenen Schnitt auszuführen, was sich insbesondere bei den Streifen nachteilig auswirkt. Andererseits sind die Streifen bei der Zuführung zur zweiten Schneideinrichtung häufig nicht exakt genug ausgerichtet. Da der Vorrichtung kontinuierlich neue Tafeln zugeführt werden, muss dieses Ausrichten zwangsläufig sehr rasch erfolgen, was ein gleichmässiges Zentrieren der Streifen erschwert. Fehler sind allenfalls erst im Nachhinein, bei der Kontrolle der fertigen Abschnitte zu erkennen. Die Qualität des Schnittwinkels ist indessen entscheidend für den problemlosen Ablauf des Schweissens. Beispielsweise bei unter InnenDruck stehenden Aerosol-Dosen oder bei hochwertigen, sogenannten Schmuckdosen, ist eine gute Qualität des Schnittwinkels unabdingbar. Hochwertige Dosen werden zudem meistens in kleineren Serien benötigt. Nicht zuletzt, sind die bekannten Vorrichtungen infolge ihres komplizierten mechanischen Aufbaus recht teuer. Gerade bei der Herstellung kleinerer Dosen-Serien ergeben sich dadurch in doppelter Hinsicht empfindliche Kostensteigerungen.

Die Erfindung stellt sich daher die Aufgabe, ein Verfahren und eine Vorrichtung zum Ausschneiden von Abschnitten aus Tafeln zu schaffen, welche die vorgehend beschriebenen Nachteile nicht aufweisen und insbesondere auch dazu geeignet sind, kleinere Abschnitt-Serien in hoher Schnittqualität zu liefern.

Das erfindungsgemässe Verfahren entspricht den kennzeichnenden Merkmalen des Patentanspruchs 1. Die Vorrichtung geht aus den Merkmalen des Patentanspruchs 9 hervor. Weitere vorteilhafte Ausbildungen sind aus den abhängigen Patentansprüchen ersichtlich.

Nachfolgend werden zwei bevorzugte Ausführungsbeispiele des Erfindungsgegenstandes anhand der Zeichnung näher beschrieben.
- Fig. 1: zeigt eine schematische Ansicht der erfindungsgemässen Vorrichtung;
- Fig. 2: zeigt in einem vergrösserten Ausschnitt aus Fig. 1 den Schneidvorgang, und zwar insbesondere das Abschneiden eines Streifens aus einer Tafel, gemäss dem ersten Ausführungsbeispiel;
- Fig. 3: zeigt den Ausschnitt nach Fig. 2, gemäss dem zweiten Ausführungsbeispiel.

Die erfindungsgemässe Vorrichtung zum Ausschneiden von Abschnitten 1 aus Tafeln 2 weist eine erste Schneideinrichtung 3 auf, zum Schneiden der Tafeln 2 in eine Mehrzahl von Streifen 4. Durch eine zweite Schneideinrichtung 5 werden jeweils mehrere Abschnitte 1 aus diesen Streifen 4 ausgeschnitten. Die zu verarbeitenden Tafeln 2 werden mittels einer an sich bekannten Zuführ-Einrichtung 6 zugeführt. Die fertigen Abschnitte 1 können entweder in einem Behälter aufgefangen oder mittels einer Fördereinrichtung zu einer Schweiss- oder Falz-Einrichtung geleitet werden. Letztere dient, wie eingangs erwähnt, der Herstellung von Dosen. Die Tafeln 2 bestehen zu diesem Zweck vorzugsweise aus Blech.

Die zugeführte Tafel 2, bzw. bereits der Tafel-Stapel, kann mittels einer Tafel- und/oder Tafel-Stapel-Zentrierung 7, wie mit den Pfeilen 8 angedeutet, zentriert werden. Diese Tafel- und/oder Tafel-Stapel-Zentrierung 7 wirkt mit einer Seiten- oder Druckmarkenzentrierung 9 zusammen, die die jeweilige Tafel 2, wie mit den Pfeilen 10 angedeutet, in der Vorschubrichtung einmittet. Die Seiten- oder Druckmarkenzentrierung 9 weist Rollen auf, die an die seitlichen Aussenkanten 11 der jeweiligen Tafel 2 anliegen. Der Tafel-Vorschub erfolgt in Richtung der Pfeile 12. Dieser Vorschub erfolgt taktweise, wobei jeder Vorschub-Takt, hier durch die drei einzelnen Pfeile 12 veranschaulicht, der Breite des zu schneidenden Streifens 4 entspricht. Das bedeutet, dass pro Takt ein Schnitt mittels der ersten Schneideinrichtung 3 erfolgt, wodurch jeweils ein Streifen 4 von der Tafel 2 abgeschnitten wird. Fördermittel zur Beförderung der einzelnen Tafeln 2 vom Stapel in den Verarbeitungsbereich sind, wie bereits erwähnt, bekannt. Sie folgen im weitesten Sinn dem Prinzip eines Förderbandes.

Für die vorliegende Erfindung ist insbesondere der kontrollierte, sichere Vorschub im Verlauf des Schnittprozesses sowie die Art und Anordnung der Schneideinrichtungen 3 und 5 von wesentlicher Bedeutung. Bei der ersten Schneideinrichtung 3 handelt es sich vorzugsweise um eine Balkenschere, bei der zweiten Schneideinrichtung 5 um eine Rollschere. Auf deren Aufbau wird später eingegangen.

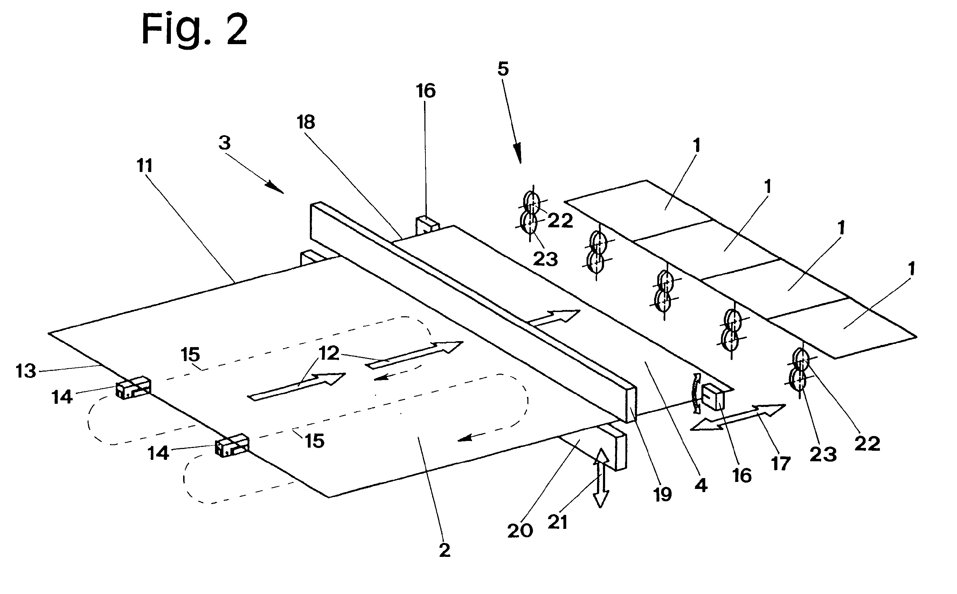

Die der ersten Schneideinrichtung 3 zugeführte Tafel 2 wird, sobald sie von der Seiten- oder Druckmarkenzentrierung 9 eingemittet wurde, von einer Halte- oder Greifeinrichtung gehalten oder gegriffen. Wie dargestellt, weist diese Halte- oder Greifeinrichtung vorzugsweise zwei die Tafel 2 an deren hinteren Kante 13 greifende Tafel-Greifer 14 auf. Die Halteoder Greifeinrichtung hält während des Vorschubs in Richtung der Pfeile 12 die Tafel 2 unverrückbar fest. Insbesondere kann der Vorschub in diesem Bereich durch das taktweise Vorschieben der Halte- oder Greifeinrichtung erfolgen. Die Halte- oder Greifeinrichtung, bzw. deren Tafel-Greifer 14, werden vorteilhaft gemäss den gestrichelten Linien 15 in Fig. 2 geführt. Die Tafel 2 wird an deren hinterer Kante 13 gegriffen und vorgeschoben. Sobald deren hinterster Streifen 4 die erste Schneideinrichtung 3 erreicht, bzw. so weit passiert hat, dass er auf deren anderen Seite herausragt, öffnen sich die Tafel-Greifer 14 und geben diese Tafel 2 frei. Die Tafel-Greifer 14 laufen danach unter der nächsten, von der Zuführ-Einrichtung 6 bereits ankommenden Tafel 2 durch, um hinter dieser wieder aufzutauchen und sie wiederum an deren hinteren Kante 13 zu greifen.

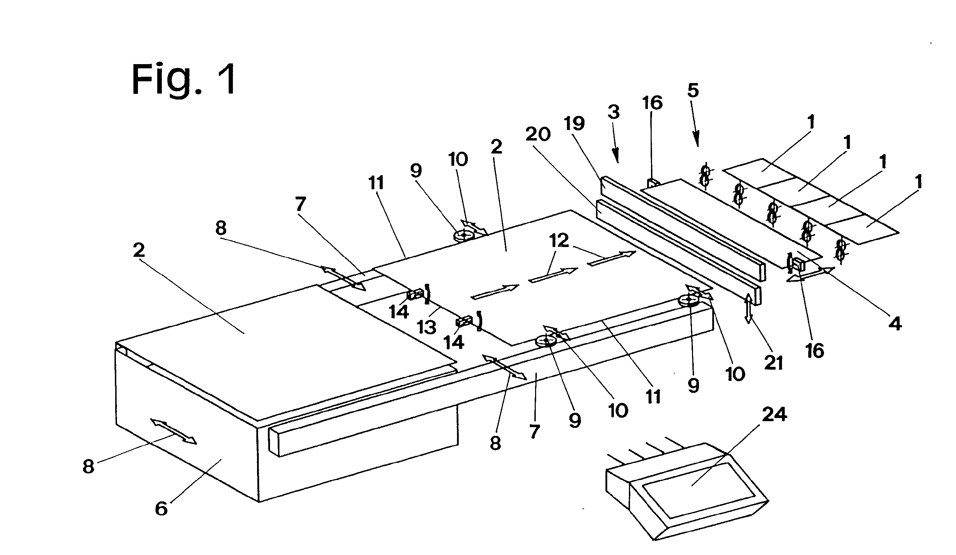

Eine ähnliche Halte- oder Greifeinrichtung befindet sich im ersten Ausführungsbeispiel nach den Fig. 1 und 2 zwischen der ersten und der zweiten Schneideinrichtung 3 bzw. 5. Diese weist Streifen-Greifer 16 auf, die im wesentlichen entlang des Pfeiles 17 bewegt werden. Sie dienen dazu, den jeweiligen, von der ersten Schneideinrichtung 3 abgeschnittenen Streifen 4 zu greifen und der zweiten Schneideinrichtung 5 zuzuführen. Danach öffnen sich die Streifen-Greifer 16 wieder, bewegen sich zurück und greifen den nächsten Streifen 4. Im Unterschied zur ersten Halte- oder Greifeinrichtung greifen diese Streifen-Greifer 16 den Streifen 4 von dessen Seitenkante 18 her. Diese zweite Halte- oder Greifeinrichtung wirkt derart mit der ersten Schneideinrichtung 3 zusammen, dass der jeweilige Streifen 4 zuerst gegriffen und erst danach abgeschnitten wird. Vorteilhaft wirkt zudem die zweite Halte- oder Greifeinrichtung so mit der ersten zusammen, dass die erste, vor der ersten Schneideinrichtung 3 liegende Halte- oder Greifeinrichtung, den letzten Streifen 4 einer Tafel 2 erst dann freigibt, wenn dieser bereits von der zweiten Halte- oder Greifeinrichtung ergriffen und übernommen wurde. Durch diese Vorkehrungen ist sichergestellt, dass jede Tafel 2 und jeder deren Streifen 4 entweder durch die eine oder die andere der beiden Halte- oder Greifeinrichtungen festgehalten wird.

Die erste Schneideinrichtung 3 besteht vorzugsweise aus einer Balkenschere. Diese ist im vorliegenden Beispiel so aufgebaut und angeordnet, dass deren feststehendes Messer 19 oben, während das bewegliche Messer 20 unten liegt. Der Schnitt erfolgt durch Bewegung des zweiten Messers 20 in Pfeilrichtung 21. Die Anordnung des beweglichen Messers 20 auf der Unterseite, wobei dieser leicht versetzt in Richtung des Vorschubs der Tafel 2 vor dem feststehenden Messer 19 liegt, bringt verschiedene Vorteile mit sich. Einerseits lässt sich dadurch dessen Antrieb im unterhalb der Arbeitsebene liegenden Maschinengehäuse unterbringen. Andererseits ist es möglich, beim letzten Streifen 4 mit den Tafel-Greifern 14 bis ganz nah an die Balkenschere zu fahren. Der Hauptvorteil der Balkenschere liegt darin, dass sie einen perfekt geraden Schnitt ergibt. Daraus resultiert bei der Dosenherstellung eine perfekte, gleichbleibende Schweissnahtqualität, was insbesondere für den Aerosoldosenbereich enorm wichtig ist.

Die zweite Schneideinrichtung 5 ist im vorliegenden Beispiel eine Rollschere. Diese weist eine Mehrzahl von auf einer hier nicht dargestellten Welle parallel mit Abstand zueinander angeordneten radartigen Rollmessern 22 und 23 auf. Die Rollmesser sind derart paarweise angeordnet, dass jeweils ein Rollmesser 22 von oben und ein zweites Rollmesser 23 von unten auf den zu schneidenden Streifen 4 der Tafel 2 wirkt. Der eingangs erwähnte Nachteil, dass Rollmesser dazu neigen, einen leicht gebogenen Schnitt auszuführen, wirkt sich hier kaum aus, da die zweite Schneideinrichtung 5 nicht über die ganze Breite der Tafel 2 schneidet, sondern nur über die Breite eines bereits durch die Balkenschere vorgeschnittenen Streifens 4. Die Streifenbreite misst gewöhnlich weniger als ¼ der Tafelbreite, wodurch der negative Einfluss eines leicht gebogenen Schnitts in diesem Bereich vernachlässigbar ist. Dadurch aber, dass der Streifen 4 jeweils fest durch die Streifen-Greifer 16 gehalten der zweiten Schneideinrichtung 5 zugeführt wird, ist auch hier eine deutliche Qualitätssteigerung des Schnitts gegeben. Da die Streifen-Greifer 16 den zuvor perfekt ausgerichteten Streifen 4 von den Tafel-Greifern 14 übernehmen, ist sichergestellt, dass Schnittlinien des Streifen-Schnitts und des Abschnitt-Schnitts im perfekten rechten Winkel zueinander liegen. Da demgegenüber beim bisherigen Stand der Technik gewöhnlich eine rasche Neuausrichtung der Streifen 4 vor der zweiten Schneideinrichtung 5 erfolgt, liegt hier eine Fehlerquelle, die häufig zu Verkantungen und unwinkligen Schnitten führt.

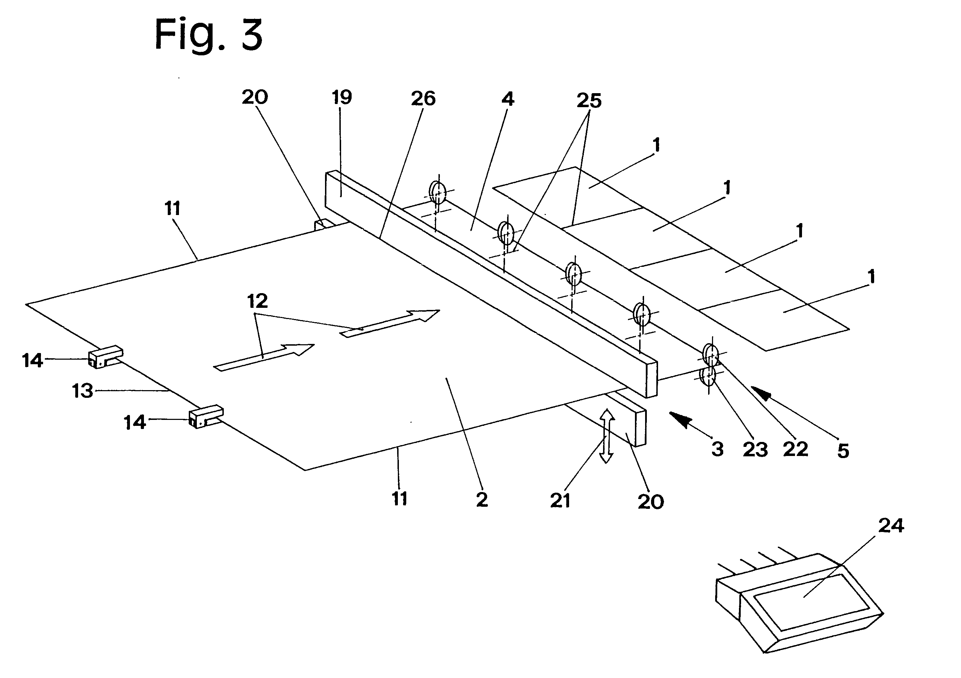

Das zweite Ausführungsbeispiel nach Fig. 3 beinhaltet eine weitere technische Vereinfachung und zugleich Verringerung von Fehlerquellen bei den Schnittvorgängen.

Wie im ersten Ausführungsbeispiel wird die Tafel 2 wird von der Halteoder Greifeinrichtung gehalten, bzw. an deren hinterer Kante 13 von den Tafel-Greifern 14 gegriffen und vorgeschoben. Die Halte- oder Greifeinrichtung hält während des Vorschubs in Richtung der Pfeile 12 die Tafel 2 unverrückbar fest. Im Unterschied zum ersten Ausführungsbeispiel, ist jedoch nur eine Halte- oder Greifeinrichtung für beide Schnittvorgänge vorhanden, d.h. es erfolgt keine Übergabe an eine weitere, den jeweils abgeschnittenen Streifen haltenden Einrichtung. Hier geben die Tafel-Greifer 14 der Halte- oder Greifeinrichtung die Tafel 2 erst dann frei, wenn beide Schnittvorgänge für alle Streifen 4 und Abschnitte 1 einer Tafel 2 soweit abgeschlossen oder soweit fortgeschritten sind, dass kein Festhalten der Tafel 2 oder eines ihrer Steifen 4 mehr erforderlich ist.

Für das Verfahren nach dem zweiten Ausführungsbeispiel ist der zeitliche Ablauf des Schnittvorgangs wesentlich. Dieser läuft wie folgt ab: Die Tafel 2 wird, durch die offene erste Schneideinrichtung 3 hindurch, der zweiten Schneideinrichtung 5 zugeführt. Da die zweite Schneideinrichtung 5 unmittelbar hinter der ersten Schneideinrichtung 3 liegt, kann der Schnittvorgang so gesteuert werden, dass die zweite Schneideinrichtung 5 zeitlich bereits vor der ersten Schneideinrichtung 3 tätig wird. Das bedeutet, dass in die vorgeschobene Tafel 2 bereits die Schnitte 25 eingebracht werden, welche die Streifen 4 in Abschnitte 1 trennen, noch bevor die erste Schneideinrichtung 3 durch Schnitte 26 jeweils einen Streifen 4 von der Tafel 2 abtrennt.

im Gegensatz zum ersten Ausführungsbeispiel und zum bisherigen Stand der Technik werden die Arbeitsgänge also umgekehrt, indem zuerst die Abschnitte 1 geschnitten und erst danach die Streifen 4. Dadurch bleiben die Abschnitte 1 bis zur Abtrennung des Streifens 4 entlang ihrer in Vorschubrichtung hinteren Kante fest mit der Tafel 2 verbunden. Die Abschnitte 1 bleiben damit absolut unverrückbar exakt ausgerichtet, bis der Streifen 4 abgetrennt wird. Erst durch die Abtrennung des Streifens 4 erfolgt die Lösung von der Halte- oder Greifeinrichtung, d.h. von den Tafel-Greifern 14.

Es ist für den erfindungsgemässen Ablauf der beiden Arbeitsgänge indessen nicht unbedingt erforderlich, dass die Schnitte 25, welche die Streifen 4 in Abschnitte 1 trennen, vollständig ausgeführt werden, bevor die erste Schneideinrichtung 3 tätig wird. Es genügt, wenn die vorgeschobene Tafel 2 in den Arbeitsbereich der zweiten Schneideinrichtung 5 gelangt und diese mit dem Schneiden beginnt. Deren Schnitte 25 brauchen also in bezug auf ihre Länge erst teilweise eingebracht sein, wenn die erste Schneideinrichtung 3 ihren Schnitt 26 ausführt. Zumal bei der im vorliegenden Beispiel verwendeten Rollschere, erfolgt sofort ein Festhalten der Tafel 2 durch die paarweise angeordneten, die Tafel von oben und unten greifenden Rollmesser 22 und 23. Die erste Schneideinrichtung 3 kann somit ihren Schnitt 26 bereits ausführen kurz nachdem die zweite Schneideinrichtung 5 die Tafel 2 angreift. Der abgeschnittene Streifen 4 rollt durch die Rollschere hindurch und kann sich in dieser Lage bereits nicht mehr aus seiner Bahn bewegen und verkanten. Ein weiteres Festhalten durch die Tafel-Greifer 14 ist dann nicht mehr notwendig.

Der wesentliche Vorteil beider Ausführungen gegenüber dem Stand der Technik liegt darin, dass die Tafeln 2 nur einmal zentriert und danach ununterbrochen festgehalten werden, bis die einzelnen Abschnitte 1 ausgeschnitten sind. Die Tafeln 2 sowie deren Streifen 4 sind dadurch während des Arbeitsablaufs fest fixiert. Schnittwinkel-Fehler, wie sie durch das bisherige ungenaue Führen und dem neuerlichen Ausrichten zwischen den beiden Schnittvorgängen hervorgerufen wurden, können nicht mehr vorkommen.

Durch den Wegfall der Einrichtung zur Neuausrichtung der Streifen 4 ist auch eine deutliche Verringerung der mechanischen Teile sowie der Einstellarbeit beim Übergang auf andere Formate gegeben. Hierbei ist zu bemerken, dass zusätzliche Einstellarbeiten nicht nur Zeit kosten, sondern auch das Fehlerrisiko erhöhen. Bei der vorliegenden Vorrichtung wird nur einmal die Tafel 2 eingemittet und ausgerichtet, nicht aber ein zweites mal auch noch deren mehreren Streifen 4. Das Einmitten der vom bereits vorgerichteten, stillstehenden Stapel kommenden Tafeln 2 ist zudem technisch weit weniger problematisch als das zusätzliche Ausrichten der von einer allfälligen ersten Rollschere lose anfliegenden Streifen 4.

Der erfindungsgemässe Aufbau der Vorrichtung begünstigt zudem die Automatisierung der Arbeitsabläufe. Da die Tafel-Greifer 14 ohnehin angesteuert werden müssen, ist im gleichen Zug ohne weiteres auch deren Anpassung an andere Formate automatisierbar. Zu diesem Zweck können die Tafel-Greifer 14 ausserdem mit an sich bekannten Sensoren, vorzugsweise optoelektronischen Sensoren, gekoppelt werden, die das Ansteuern und Greifen der jeweiligen Tafel 2, bzw. des Streifens 4 vereinfachen und Fehlgriffe ausschliessen. Derartige Sensoren können bereits auch beim Einmitten und Ausrichten der Tafel 2 zum Einsatz kommen. Beispielsweise können die optoelektronischen Sensoren so angeordnet und ausgebildet werden, dass sie in der Lage sind, den auf eine Lichtquelle fallenden Schatten einer Kante 13 bzw. Aussen- oder Seitenkante 11 einer Tafel 2 zu erkennen. Die Lichtquelle kann unter, der dazugehörige Sensor über der Tafel 2 angeordnet sein. Möglich ist indessen auch die Sensor-Erkennung von auf den Tafeln angebrachten Markierungen. Durch die Steuerung 24 werden selbstverständlich auch die Schneideinrichtungen 3 und 5 angesteuert, wobei auch hier die Anpassung an andere Formate automatisierbar ist. Bei der Balkenschere ist der Aufwand verhältnismässig gering. Es ist nur der taktweise Tafel-Vorschub in Pfeilrichtung 12 und die damit einhergehende Schnittbewegung anders zu steuern. Die entsprechenden Softwaredaten sind bereits werkseitig vorgegeben und können beim Um- oder Einstellen einfach abgerufen werden. Möglich ist es auch die Verstellung der Rollschere, bzw. ihrer Rollmesser 22 und 23 zu automatisieren. Hierzu können diese mit einem Linearantrieb versehen sein, mittels dem die Rollmesser 22 und 23 in Achsrichtung auf ihrer Antriebs-Welle verschiebbar sind. Vorzugsweise wird dabei ein zusammengehörendes Rollmesser-Paar 22 und 23 gemeinsam entlang der Antriebs-Welle, also quer zur Vorschubrichtung des Streifens 4, verschoben. Durch diese steuerungsmässige Ausbildung der Vorrichtung wird die Einstellarbeit ganz erheblich vereinfacht. Dauerte die Einstell- und Justierarbeit beim bisherigen Stand der Technik bei jedem Formatwechsel 2.5 bis 8 Stunden, so kann jetzt diese Arbeit in höchstens 20 Minuten erledigt werden. Die Daten des neuen Formates brauchen nur der Steuerung 24 eingetippt werden oder allenfalls sogar nur mit einem einzigen Tastendruck ein Format aus einer vorprogrammierten Auswahl von Formaten abgerufen werden. Dadurch wird nicht nur enorm viel Zeit gewonnen, sondern auch das Fehlerrisiko bei unzähligen manuellen Einstellungen vermieden. Das präzise Schneiden von kleineren Tafelbzw. Ausschnitt-Serien bereitet darum überhaupt keine Probleme mehr, was insbesondere die Fertigung von besonderen, von der Massenware abweichenden Dosen, wie qualitativ hochwertige Schmuck- oder Aerosoldosen begünstigt. Schliesslich kann die erfindungsgemässe Vorrichtung bedeutend günstiger als bisher bekannte Maschinen hergestellt und angeboten werden. Sie ist zudem weniger störungsanfällig, wartungsfreundlicher, nimmt weniger Platz ein und kann, da das Schnittgut nicht im rechten Winkel umgeleitet wird, im Betrieb auch für den Arbeitsablauf im Zusammenwirken mit den übrigen Maschinen einer Fertigungsstrasse sinnvoller angeordnet werden.

Obwohl die Vorrichtung vorzugsweise wie gezeichnet und vorgehend beschrieben ausgebildet wird, liegt es im Rahmen der Erfindung diese auch anders aufzubauen. Beispielsweise können anstelle der Tafel-Greifer 14 andere Halte- oder Greifeinrichtungen verwendet werden, bis hin zu die Tafeln 2 oder die Streifen 4 haltenden Magnet- oder Saug-Einrichtungen. Denkbar wäre zudem eine Halte- oder Greifeinrichtung mit unterhalb und oberhalb der Tafeln 2 und/oder Streifen 4 zusammenwirkenden, evtl. angetriebenen Rollenpaaren. Letztere Ausführung erscheint jedoch in bezug auf ein zuverlässig ausgerichtetes Führen der Tafeln 2 oder der Streifen 4 weniger sicher. Möglich ist es schliesslich, andere Schneideinrichtungen als Balkenschere und Rollschere zu verwenden. Selbstverständlich kann die Vorrichtung zum Ausschneiden von Abschnitten aus beliebigem tafelförmigem Gut verwendet werden, nicht nur aus Blech und nicht nur zur Dosenherstellung.

## Patentansprüche

1. Verfahren zum Ausschneiden von Abschnitten aus Tafeln, mit einem Arbeitsgang zum Schneiden der Tafeln (2) in Streifen (4), mittels einer ersten Schneideinrichtung (3), und mit einem weiteren Arbeitsgang zum Schneiden der Streifen (4) in Abschnitte (1), mittels einer zweiten Schneideinrichtung (5), **dadurch gekennzeichnet, dass** die Tafeln (2) und die daraus geschnittenen Streifen (4) zumindest bis zum Beginn des zweiten Arbeitsgangs derart geführt und/oder gehalten werden, dass die vor dem ersten Arbeitsgang festgelegte Ausrichtung bis zum zweiten Arbeitsgang beibehalten wird, wodurch sichergestellt wird, dass das Schneiden der Tafeln (2) in Streifen (4) einerseits und das Schneiden der Streifen (4) in Abschnitte (1) andererseits, jeweils im genauen Winkel zueinander erfolgen kann.

2. Verfahren nach Anspruch 1, **dadurch gekennzeichnet, dass** die Tafeln (2) und die daraus geschnittenen Streifen (4) in einer geraden Vorschubrichtung durch beide Arbeitsgänge bewegt werden.

3. Verfahren nach Anspruch 1 oder 2, **dadurch gekennzeichnet, dass** die Tafeln (2) vor dem ersten Arbeitsgang durch mindestens eine erste Halte- oder Greifeinrichtung gehalten oder gegriffen werden und einer ersten Schneideinrichtung (3) zum Schneiden der Tafeln (2) in Streifen (4) zugeführt werden und die derart geschnittenen Streifen (4) von mindestens einer zweiten Halte- oder Greifeinrichtung übernommen und einer zweiten Schneideinrichtung (5) zum Schneiden der Streifen (4) in Abschnitte (1) zugeführt werden, wobei die erste Halte- oder Greifeinrichtung die jeweilige Tafel (2) oder den jeweiligen Streifen (4) erst dann freigibt, wenn diese oder dieser von der zweiten Halte- oder Greifeinrichtung übernommen wurde, wodurch die Tafeln (2) oder Streifen (4) ununterbrochen gehalten werden.

4. Verfahren nach Anspruch 1 oder 2, **dadurch gekennzeichnet, dass** die beiden Arbeitsgänge so gesteuert werden, dass die zweite Schneideinrichtung (5), zum Schneiden der Streifen (4) in Abschnitte (1), zeitlich bereits vor der ersten Schneideinrichtung (3) tätig wird, wobei zuerst mindestens teilweise die Schnitte (25) eingebracht werden, welche die Streifen (4) in Abschnitte (1) trennen und danach die Schnitte (26) eingebracht werden, welche die Streifen (4) von der Tafel (2) abtrennen, wodurch die Abschnitte (1) bis zur Abtrennung des jeweiligen Streifens (4) entlang der Linie des diesbezüglichen Schnittes (26) mit der Tafel (2) verbunden und damit exakt ausgerichtet bleiben.

5. Verfahren nach Anspruch 4, **dadurch gekennzeichnet, dass** die Tafeln (2) vor dem ersten Arbeitsgang durch mindestens eine Halte- oder Greifeinrichtung gehalten oder gegriffen werden und nacheinander einer ersten Schneideinrichtung (3) zum Schneiden der Tafeln (2) in Streifen (4) und einer zweiten Schneideinrichtung (5) zum Schneiden der Streifen (4) in Abschnitte (1) zugeführt werden, wobei die erste Scheideinrichtung (3) so gesteuert wird, dass deren Schnitt erst dann erfolgt, wenn der in Vorschubrichtung vordere Teil der jeweiligen Tafel (2), der nach dem Schnitt durch die erste Schneideinrichtung (3) einen Streifen (4) bildet, sich bereits im Bereich der zweiten Schneideinrichtung (5) befindet, wodurch die Tafeln (2) oder Streifen (4) ununterbrochen gehalten werden.

6. Verfahren nach Anspruch 4 oder 5, **dadurch gekennzeichnet, dass** die erste Schneideinrichtung (3), zum Schneiden der Tafeln (2) in Streifen (4), ihren Schnitt (26) ausführt, sobald die Tafel (2) derart in den Bereich der zweiten Schneideinrichtung (5) gelangt ist, dass die Tafel (2) durch den beginnenden Schnitt (25) der zweiten Schneideinrichtung (5) gehalten wird, z.B. indem die Tafel (2) durch mindestens ein Rollmesser-Paar (22, 23) einer die zweiten Schneideinrichtung (5) bildenden Rollschere gehalten wird.

7. Verfahren nach einem der Ansprüche 1 bis 6, **dadurch gekennzeichnet, dass** mindestens eine Halte- oder Greifeinrichtung zum Führen und Halten der Tafeln (2) und mindestens eine Schneideinrichtung (3, 5) derart mit einer Steuerung (24) verbunden sind, dass ein Formatwechsel zu einer anderen Tafel-, Streifen- und/oder Abschnittgrösse durch Eingabe oder Auswahl des neuen Formates an der Steuerung (24) erfolgen kann.

8. Verfahren nach einem der Ansprüche 1 bis 7, **dadurch gekennzeichnet, dass** der Vorschub der Tafeln (2) taktweise erfolgt, wobei die einzelnen Vorschub-Takte vorzugsweise der Breite eines zu schneidenden Streifens (4) entsprechen.

9. Vorrichtung zum Ausschneiden von Abschnitten aus Tafeln nach dem Verfahren gemäss Anspruch 1, mit einer ersten Schneideinrichtung (3) zum Schneiden der Tafeln (2) in Streifen (4) und einer zweiten Schneideinrichtung (5) zum Ausschneiden von Abschnitten (1) aus diesen Streifen (4), **gekennzeichnet durch** mindestens eine Halte- oder Greifeinrichtung (14, 16) zum Zuführen der Tafeln (2) der Schneideinrichtung (3) zum Schneiden der Tafeln (2) in Streifen (4) und/oder der Schneideinrichtung (5) zum Schneiden der Streifen (4) in Abschnitte (1), wobei die Halte- oder Greifeinrichtung (14, 16) so angeordnet und gesteuert ist, dass die jeweilige Tafel (2) und der jeweilige Streifen (4) derart **durch** beide Arbeitsgänge führbar ist, dass sich deren Ausrichtung nicht verändert.

10. Vorrichtung nach Anspruch 9, **gekennzeichnet durch** mindestens eine erste Halte- oder Greifeinrichtung (14) zum Zuführen der Tafeln (2) der ersten Schneideinrichtung (3) zum Schneiden der Tafeln (2) in Streifen (4) und mindestens einer zweiten Halte- oder Greifeinrichtung (16) zum Zuführen der geschnittenen Streifen (4) der zweiten Schneideinrichtung (5) zum Schneiden der Streifen (4) in Abschnitte (1), wobei die Halte- oder Greifeinrichtungen (14, 16) so angeordnet und gesteuert sind, dass die jeweilige Tafel (2) oder der jeweilige Streifen (4) derart von der ersten Halte- oder Greifeinrichtung (14, 16) an die zweite übergeben werden kann, dass sich deren Ausrichtung nicht verändert.

11. Vorrichtung nach Anspruch 9 oder 10, **dadurch gekennzeichnet, dass** die Halte- oder Greifeinrichtungen (14, 16) so angeordnet und ausgelegt sind, dass Vorschub der Tafeln (2) und der daraus geschnittenen Streifen (4) in einer geraden Vorschubrichtung durch beide Arbeitsgänge erfolgen kann.

12. Vorrichtung nach Anspruch 9 oder 11, **dadurch gekennzeichnet, dass** die Schneideinrichtungen (3, 5) derart angeordnet und gesteuert sind, dass zuerst mindestens teilweise die Schnitte (25) eingebracht werden können, welche die Streifen (4) in Abschnitte (1) trennen und danach die Schnitte (26) eingebracht werden können, welche die Streifen (4) von der Tafel (2) abtrennen.

13. Vorrichtung nach Anspruch 12, **gekennzeichnet durch** mindestens eine Halte- oder Greifeinrichtung (14) zum vorschiebenden Zuführen der Tafeln (2), welche so angeordnet und gesteuert ist, dass die jeweilige Tafel (2) derart den Schneideinrichtungen (3, 5) zuführbar ist, dass der Schnitt der ersten Schneideinrichtung (3) erst dann erfolgen kann, wenn der in Vorschubrichtung vordere Teil der jeweiligen Tafel (2), der nach dem Schnitt **durch** die erste Schneideinrichtung (3) einen Streifen (4) bildet, sich bereits im Bereich der zweiten Schneideinrichtung (5) befindet, wodurch die Tafeln (2) oder Streifen (4) ununterbrochen gehalten werden.

14. Vorrichtung nach einem der Ansprüche 9 bis 13, **dadurch gekennzeichnet, dass** die Halte- oder Greifeinrichtungen (14, 16) so ausgelegt sind, dass sie die Tafeln (2) und/oder Streifen (4) magnetisch, bzw. elektromagnetisch halten.

15. Vorrichtung nach einem der Ansprüche 9 bis 13, **dadurch gekennzeichnet, dass** die Halte- oder Greifeinrichtungen (14, 16) so ausgelegt sind, dass sie die Tafeln (2) und/oder Streifen (4) durch Saugwirkung halten.

16. Vorrichtung nach einem der Ansprüche 9 bis 13, **dadurch gekennzeichnet, dass** die Halte- oder Greifeinrichtung (14, 16) mindestens einen Tafel-Greifer (14) und/oder einen Streifen-Greifer (16) aufweist, welche so ausgelegt ist, dass die Tafel (2) oder der Streifen (4) an einer Kante, d.h. entweder an der in Vorschubrichtung hinten liegenden Kante (13) oder an einer Aussen- oder Seitenkante (11, 18) greifbar sind.

17. Vorrichtung nach Anspruch 16, **dadurch gekennzeichnet, dass** der Tafel-Greifer (14) so geführt und angetrieben ist, dass er die Tafel (2) entweder an deren in Vorschubrichtung hinten liegenden Kante (13) oder an deren Aussenkante (11) greift und sie mindestens bis zur ersten Schneideinrichtung (3) führt, wobei eine Führung vorhanden ist, um den Tafel-Greifer (14) unterhalb, oberhalb oder seitlich (15) entlang der nächsten Tafel (2) zurückzuführen, um die nächste Tafel (2) an deren hinteren Kante (13) oder Aussenkante (11) greifen zu können.

18. Vorrichtung nach Anspruch 17, **gekennzeichnet durch** mindestens einen Streifen-Greifer (16) der so angeordnet und gesteuert ist, dass er die Tafel (2) oder den Streifen (4) vom Tafel-Greifer (14) übernehmen kann.

19. Vorrichtung nach Anspruch 18, **dadurch gekennzeichnet, dass** der Streifen-Greifer (16) so geführt und angetrieben ist, dass er den Streifen (4) an dessen in Vorschubrichtung seitlich liegenden Seitenkante (18) greift, den Streifen (4) zur zweiten Schneideinrichtung (5) führt und ihn danach freigibt, wobei eine Führung vorhanden ist, um den Streifen-Greifer (14) entlang des nächsten Streifens (4) zurückzuführen (17), um den nächsten Streifen (4) an dessen Seitenkante (18) greifen zu können.

20. Vorrichtung nach einem der Ansprüche 9 bis 19, **dadurch gekennzeichnet, dass** die Halte- oder Greifeinrichtungen, z.B. die Tafel-Greifer (14) und Steifen-Greifer (16), mit Sensoren gekoppelt sind, beispielsweise optoelektronische Sensoren, um sie an die Tafeln (2) oder Streifen (4) heranführen zu können.

21. Vorrichtung nach einem der Ansprüche 9 bis 20, **gekennzeichnet durch** mindestens eine Seiten- oder Druckmarkenzentrierung (9), mit dem Zweck, die Tafeln (2) vor der Übernahme **durch** die erste Halteoder Greifeinrichtung (14) in Vorschubrichtung einzumitten.

22. Vorrichtung nach einem der Ansprüche 9 bis 21, **dadurch gekennzeichnet, dass** die in Vorschubrichtung erste Schneideinrichtung (3) eine Balkenschere aufweist.

23. Vorrichtung nach Anspruch 22, **dadurch gekennzeichnet, dass** die Balkenschere ein oben angeordnetes feststehendes Messer (19) und ein unten geführtes, bewegliches Messer (20) aufweist.

24. Vorrichtung nach einem der Ansprüche 9 bis 23, **dadurch gekennzeichnet, dass** die in Vorschubrichtung zweite Schneideinrichtung (5) eine Rollschere aufweist, mit paarweise angeordneten Rollmessern (22, 23), wobei das erste Rollmesser (22) jeweils von oben und das zweite Rollmesser (23) jeweils von unten auf den zu schneidenden Streifen zu wirken bestimmt ist.

25. Vorrichtung nach Anspruch 24, **dadurch gekennzeichnet, dass** die Rollmesser (22, 23) entweder einzeln oder paarweise mit einem Linearantrieb versehen sind, um deren Position rechtwinklig zur Vorschubrichtung der Steifen (4) verschieben zu können, welcher Linearantrieb vorzugsweise mit einer Steuerung (24) verbunden ist.

26. Vorrichtung nach einem der Ansprüche 9 bis 25, **gekennzeichnet durch** eine Steuerung (24), die derart ausgelegt und mit den Halteoder Greifeinrichtungen (14, 16) verbunden ist, dass die Anpassung an andere Tafel- oder Streifenformate von der Steuerung (24) aus erfolgen kann, entweder **durch** Eingabe des neuen Formates oder **durch** Abrufen eines Formates aus einer vorgegebenen oder vorprogrammierten Auswahl.

27. Vorrichtung nach Anspruch 26, **dadurch gekennzeichnet, dass** die Steuerung (24) derart ausgelegt ist, dass beim Übergang auf ein anderes Format der Vorschub, bzw. Vorschubtakt, der Tafel (2) und/oder der Schlagrhythmus des beweglichen Messers (20) einer Balkenschere verändert wird, und/oder, rechtwinklig zur Vorschubrichtung der Steifen (4), die Position von über einen Linearantrieb verschiebbaren Rollmessern (22, 23) einer Rollschere.
